# EUROPEAN PATENT APPLICATION

(11) **EP 0 989 506 A2**
(43) Date of publication of application: **29.03.2000**
(21) Application number: 99306827.9
(22) Date of filing: 27.08.1999
(51) Int. Cl.: G06F 17/60

(54) **System and method of simultaneously displaying prices in multiple currencies**

(30) Priority: 01.09.1998 US 144948
(71) Applicant: NCR INTERNATIONAL INC., Dayton, Ohio 45479 (US)
(72) Inventor: Zimmerman, Terry Lee, Lawrenceville, Georgia 30043 (US); Bhyravabhotla, Raghurama, Duluth, Georgia 30096 (US)
(74) Representative: Cleary, Fidelma

(57) **Abstract**

An electronic price label (EPL) system (10) which is capable of simultaneously displaying price information in a plurality of different currencies is provided. The system (10) includes an EPL (22) and a computer (12). The EPL (22) includes a display (56) having first and second portions, and a control circuit (55) which causes the display (56) to display simultaneously price information in a plurality of different currencies. The computer (12) sends messages to the EPL (22) instructing the EPL (22) to display primary currency price information in the first portion of the display (56) and secondary currency price information in the second portion of the display (56).

## Description

The present invention relates to electronic price label systems and, more specifically, to a system and method of displaying prices in multiple currencies.

Electronic price label (EPL) systems typically include a plurality of EPLs for each merchandise item in a transaction establishment. EPLs typically display a price and a unit price of corresponding merchandise items on transaction establishment shelves and are typically attached to a rail along the leading edge of the shelves. A transaction establishment may contain thousands of EPLs to display the prices of the merchandise items. The EPLs are coupled to a central server from where information about the EPLs is typically maintained in an EPL data file. Price information displayed by the EPLs is obtained from the price look-up (PLU) file.

In some transaction establishments it would be desirable to display prices in multiple currencies simultaneously, rather than a price and unit price in a single currency, particularly in countries in which multiple currencies are in use. Multiple prices may easily be displayed using conventional paper shelf tags. Given the many advantages of EPLs over conventional paper shelf tags, it would also be desirable to provide an electronic price label system and method of simultaneously displaying prices in multiple currencies, or by sequentially flashing prices in different currencies.

It is accordingly an object of the present invention to provide an electronic price label system and method of simultaneously displaying prices in multiple currencies. Another object is to provide such a system and method which simultaneously display total prices in multiple currencies using an electronic price label.

The system of the invention includes an EPL and a computer. The EPL includes a display having first and second portions, and a control circuit which causes the display to simultaneously display price information in a plurality of different currencies. The computer sends messages to the EPL instructing the EPL to display primary currency price information in the first portion of the display and secondary currency price information in the second portion of the display.

In a preferred embodiment, the computer calculates the secondary price information from the primary price information using an exchange rate. When the first portion of the EPL typically displays total price information, but the second portion typically displays unit price information, the computer uses a package size entry of one to calculate secondary unit price information in order to cause the EPL to display secondary total price information in the second portion.

In order that the present invention may be more readily understood, a preferred embodiment will now be described with reference to the accompanying drawings, in which:
Fig. 1 is a block diagram of a transaction system including the EPL system;
Fig. 2 is a diagram showing data files used within a transaction establishment;
Fig. 3 is a perspective view of an EPL which is simultaneously displaying prices in first and second currencies; and
Fig. 4 is a flow diagram illustrating operation of the present invention.

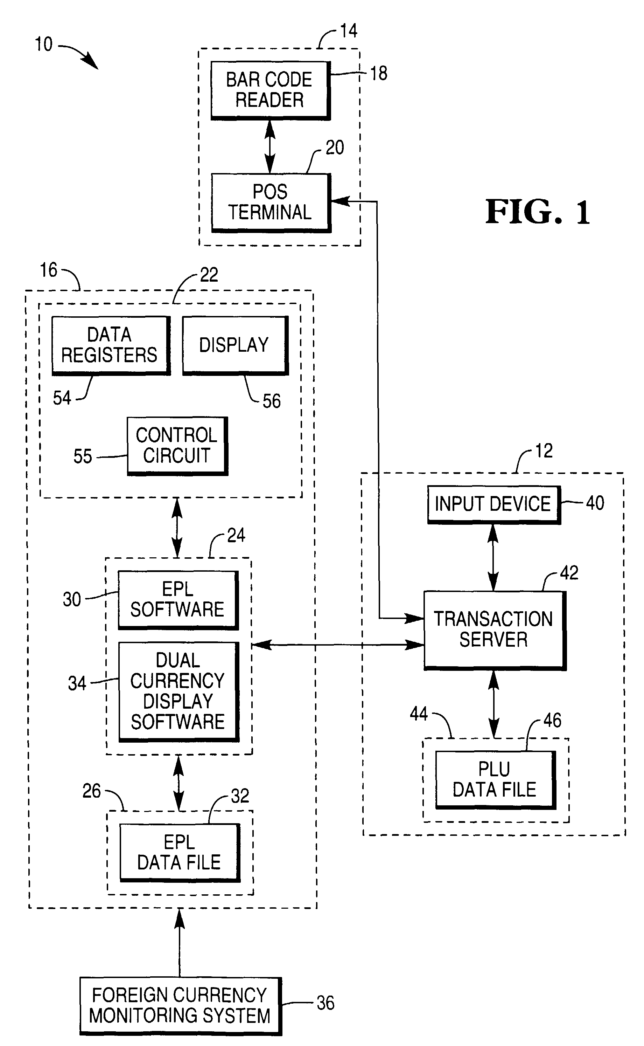

Referring to Fig. 1 of the accompanying drawings, transaction system 10 primarily includes host computer system 12, point-of-sale (POS) system 14 and EPL system 16. Herein, components 12 and 14 are shown as separate components that are networked together, but they may also form a single component. Thus, host computer system 12 may be a POS terminal which doubles as a host computer for network of other POS terminals.

POS system 14 includes bar code reader 18 and terminal 20.

EPL system 16 primarily includes EPLs 22, host EPL terminal 24, and EPL storage medium 26.

EPLs 22 each include data registers 54, control circuitry 55, and display 56. Data registers 54 contain data, usually price data and promotional data, sent from EPL software 30.

Control circuitry 55 communicates with host EPL terminal 24 and controls operation of display 56, including the display of price, currency, and other promotional information and blinking or flashing of display contents.

Display 56 is preferably a liquid crystal display, which is capable of simultaneously displaying two pieces of price information, typically a price and a unit price in a single currency. Under the present invention, display 56 is alternatively used to simultaneously display price information in two different currencies.

Host EPL terminal 24 executes EPL software 30. To assist with execution of certain tasks performed by EPL software 30, EPL terminal 24 includes a built-in time keeping device, commonly referred to as a system clock, which is synchronized with current time, in order automatically to execute the tasks at their scheduled times.

EPL software 30 is responsible for scheduling and transmitting messages to EPLs 22. The messages may contain price and promotional data from price look-up (PLU) file 46. EPL software 30 obtains prices and promotional data in PLU data file 46 as they are entered using input device 40 (immediate processing) or after they have been stored within PLU data file 46. EPL software 30 automatically initiates price changes for the displayed primary currency price.

EPL computer 12 also executes multiple currency display software 34 which manages display of dual currency price information through EPL software 30. Multiple currency display software 34 works with EPL control software 30 to send control messages to EPLs 22 containing the secondary currency price information and a command to display the secondary currency price information in the display field normally occupied by the per unit price in the primary currency. Multiple currency display software 34 may alternatively flash total and unit prices in different currencies in alternating fashion.

Multiple currency display software 34 uses exchange rate information to convert primary currency price information to secondary currency price information. Multiple currency display software 34 may obtain the exchange rate information directly from foreign currency monitoring system 36. Foreign currency monitoring system 36 may be any network source of foreign currency information. Alternatively, provision may be made for an exchange rate entry in PLU data file 46 from which multiple currency display software 34 may obtain the exchange rate information.

EPL storage medium 26 stores EPL data file 32 and is preferably a fixed disk drive.

EPL data file 32 contains EPL identification information and checksum information. The checksum information is preferably a price checksum calculated from a corresponding price in PLU data file 46.

Host computer system 12 includes PLU storage medium 44, transaction server 42, and input device 40.

Transaction server 42 handles price requests from POS terminal 20 and EPL system 16. POS terminal 20 sends item identification information to transaction server 42 and transaction server 42 returns the corresponding price from PLU data file 46. EPL control software 30 obtains primary currency prices from PLU data file 46 through transaction server 42.

PLU storage medium 44 stores PLU data file 46. PLU data file 46 is available for distribution to POS terminal 20 and EPL system 16. Provision may be made for direct access to PLU data file 46 by bar code reader 18 or EPL terminal 24. When transaction server 40 controls prices for many transaction establishments, each transaction establishment also includes a transaction server 40 with its own PLU data file 46.

Under the present invention, multiple currency display software 34 preferably obtains primary price information from PLU data file 46, but may also obtain primary price information from the price checksum in EPL data file 32.

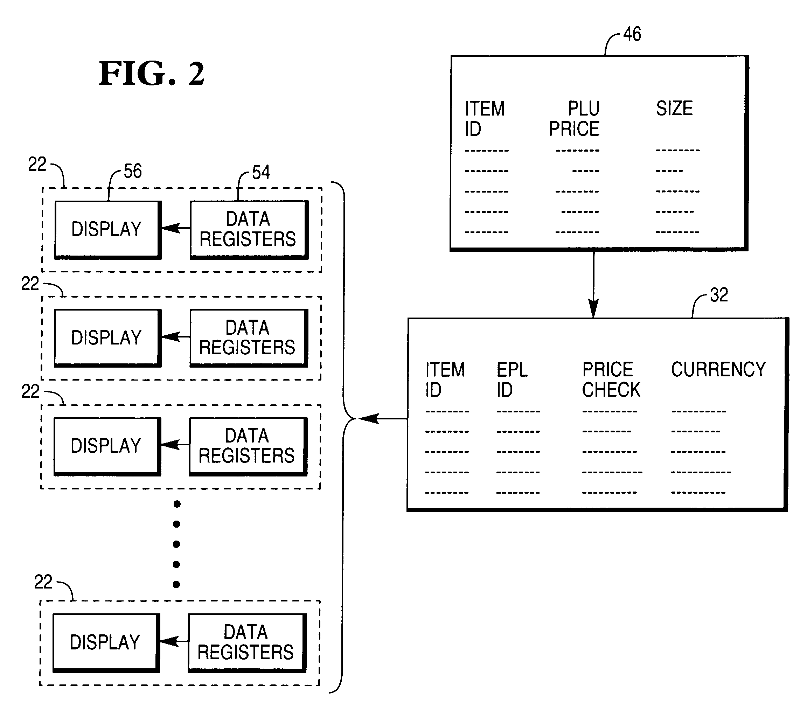

Turning now to Fig. 2, EPL data file 32 and PLU data file 46 are shown in more detail.

EPL data file 32 includes a line entry for each EPL 22 in EPL system 16. Each line entry has an item identification entry (ITEM ID), an EPL identification entry (EPL ID), a price checksum value entry (PRICE CHECK), and a currency option entry (CURRENCY).

Entry ITEM ID identifies a store item. Entry EPL ID identifies which EPL is assigned to the item. Entry PRICE CHECK is a checksum value of the primary currency price. Entry CURRENCY may be one or more entries which identify whether multiple currencies are displayed, and if so, the currencies and the mode of operation, simultaneous or flashing.

PLU data file 46 includes a line entry for each item sold in the transaction establishment. Each line entry has at least an item identification entry (ITEM ID), a PLU price entry (PLU PRICE), and a package size entry (SIZE).

Entry ITEM ID identifies a store item. Entry PLU PRICE identifies the price read by POS system 14 in terms of a primary currency to determine the price of each item during scanning by bar code reader 18. Entry SIZE identifies unit of measurement for each item. Under the present invention, package size is set equal to "1" when the currency entry is set to display simultaneous display of prices in primary and second currencies.

Alternatively, a configuration option may be used to indicate whether two currencies will be displayed simultaneously. For this option, a '0' might indicate primary currency only, a '1' might indicate display two currencies simultaneously, and a '2' might indicate display unit price and total price of primary currency and display the unit price and total price of all secondary currencies and flash through data registers 54 similar to a promotional flashing message.

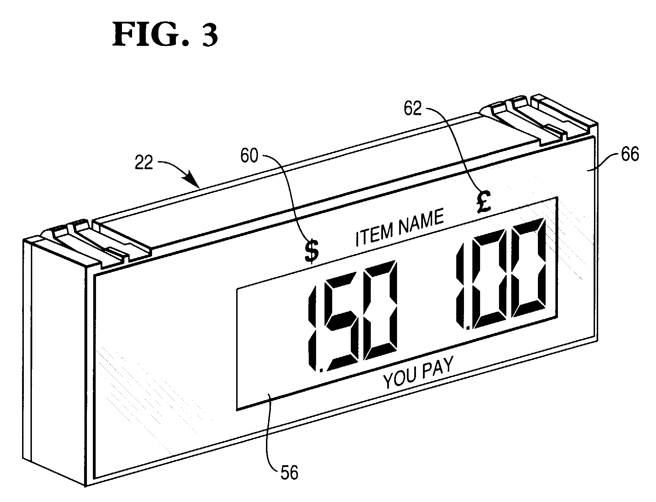

Turning now to Fig. 3, EPL 22 is shown in more detail. The primary currency price is in terms of U.S. Dollars and the secondary currency price is in terms of British Pounds Sterling.

Overlay 66 contains information that changes so infrequently that there is little need to display it electronically using display 56. Overlay 66 is made of paper or plastic and an adhesive to attach it to EPL 22. When prices in two different currencies are displayed simultaneously, currency symbols 60 and 62 for first and second currencies are printed on overlay 66. Overlay 66 contains no currency symbols if price information is sequentially flashed. Otherwise, overlay 66 may or may not include a currency symbol in the default mode of operation.

Display 56 simultaneously displays price information in each currency. Here, display 56 displays a total price in each currency, but display 56 may alternatively be configured to display a unit price in each currency, or a total price and unit price in each currency in flashing sequence.

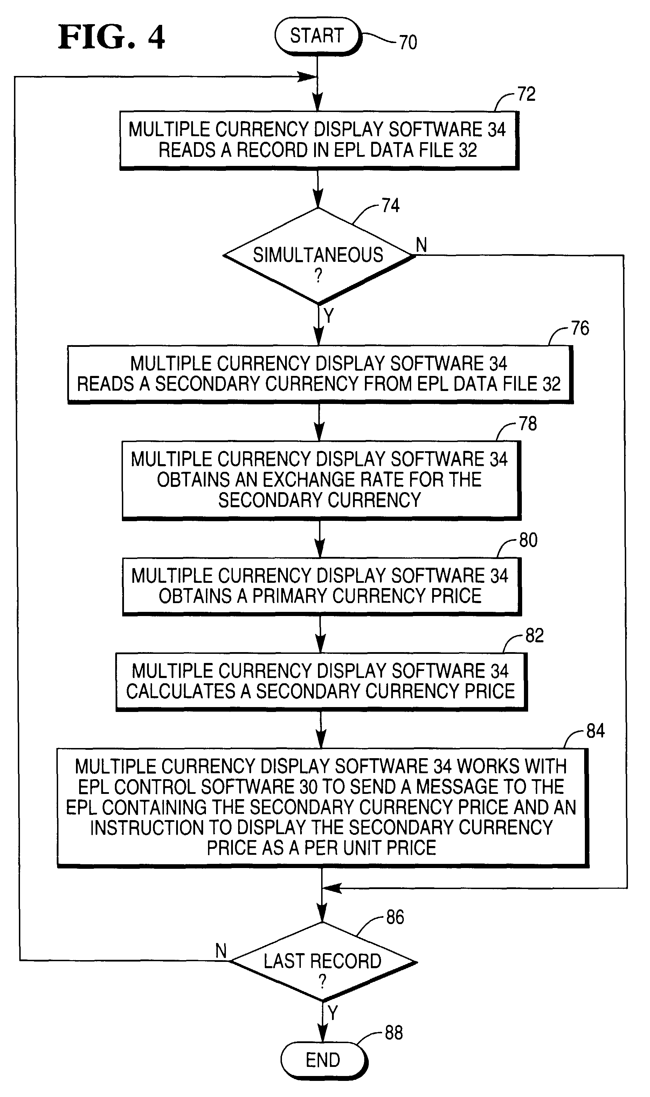

Turning now to Fig. 4, operation of multiple currency display software 34 is illustrated beginning with START 70. Multiple currency display software 34 displays prices in two different currencies simultaneously.

In step 72, multiple currency display software 34 reads a record for an EPL in EPL data file 32 to obtain an item identification number and to determine whether multiple currency prices must be displayed.

In step 74, multiple currency display software 34 determines whether the currency option is set to simultaneous display. If so, operation proceeds to step 76. If not, operation proceeds to step 86.

In step 76, multiple currency display software 34 reads a secondary currency from EPL data file 32, or a separate file.

In step 78, multiple currency display software 34 obtains an exchange rate for the secondary currency, either directly from foreign currency monitoring system 36 or from some other source file, such as PLU data file 46.

In step 80, multiple currency display software 34 obtains a primary currency price, either from PLU data file 46 or EPL data file 32.

In step 82, multiple currency display software 34 converts the primary currency price to a secondary currency price.

In step 84, multiple currency display software 34 works with EPL control software 30 to send a message to EPL 22 containing the secondary currency price and an instruction to display the secondary currency price in place of a per unit price in the primary currency.

In step 86, multiple currency display software 34 determines whether additional records in EPL data file 32 must be read. If so, operation returns to step 72. If not, operation ends in step 88.

Although the present invention has been described with particular reference to certain preferred embodiments thereof, variations and modifications of the present invention can be effected within the scope of the following claims. For example, a larger display area is also envisioned for displaying more than two prices in terms of more than two currencies.

## Claims

1. An electronic price label (EPL) (22), characterised by
a display (56) having a first portion and a second portion; and a control circuit (55) which causes the display (56) to display simultaneously primary price information in a first currency in the first portion and second price information in a second currency different from the first currency in the second portion.

2. The EPL according to claim 1, characterised in that the primary price information and the second price information comprise total price information for an item associated with the EPL (22).

3. The EPL according to claim 1, characterised in that the primary price information and the second price information comprise unit price information for an item associated with the EPL (22).

4. The EPL according to claim 1, 2 or 3, further characterised by a housing containing the display (56) and the control circuit (55) and including a front surface containing an aperture which exposes the display (56); and an overlay (66) attached to the front surface marked with a first symbol (60) adjacent the first portion identifying the first currency and a second symbol (62) adjacent the second portion identifying the second currency.

5. A method of simultaneously displaying secondary price information by an electronic price label (EPL) (22) based upon a secondary currency in addition to primary price information based upon a primary currency different from the secondary currency, characterised the steps of:
(a) obtaining the primary price information;
(b) obtaining secondary currency exchange rate information for converting the primary price information to the secondary price information;
(c) converting the primary price information to the secondary price information using the secondary currency exchange rate information; and
(d) sending a message to the EPL (22) instructing the EPL (22) to display simultaneously the secondary price information and the primary price information.

6. The method according to claim 5, wherein the primary and second price information comprise primary and secondary total price information, and characterised by the further steps of:
(e) displaying the primary total price information in a first portion of a display (56) within the EPL (22); and
(f) displaying the secondary total price information in a second portion of the display (56).

7. The method according to claim 6, wherein the first portion of the EPL (22) displays total price information and the second portion displays unit price information, and characterised in that step (c) comprises the substeps of:
(c-1) reading a package size of one for the item;
(c-2) calculating primary unit price information for the item in the primary currency based upon the package size;
(c-3) calculating secondary unit price information for the item equal to secondary total price information using the secondary currency exchange rate information.

8. The method according to claim 7, characterised in that step (f) comprises the substep of:
(f-1) displaying the secondary unit price information in the second portion of the display (56) as the secondary total price information by the EPL (22).

9. The method according to claim 5, 6, 7 or 8 characterised in that step (a) comprises the substep of:
(a-1) reading a record for the EPL (22) in a data file (32) containing the primary price information.

10. The method according to claim 9, characterised by the substep of:
(a-2) calculating a primary currency price for display from a price checksum within the data file (32).

11. The method according to claim 5, 6, 7 or 8,
characterised in that step (a) comprises the substep of:
(a-1) reading the primary price information from a price file (46).

12. The method according to any one of claims 5 to 11, characterised in that step (b) comprises the substep of:
(b-1) obtaining the secondary currency exchange rate information from a foreign currency system.

13. The method according to any one of claims 5 to 12, characterised in that step (d) comprises the substep of:
(d-1) sending a price change message to the EPL (22) instructing the EPL (22) to display simultaneously the primary and secondary price information.

14. An electronic price label (EPL) system (10),
characterised by an EPL (22) including a display (56) having a first portion and a second portion, and a control circuit (55) which causes the display (56) to display simultaneously primary price information in a first currency in the first portion and second price information in a second currency different from the first currency; and a computer (12) which sends messages to the EPL (22) instructing the EPL (22) to display simultaneously the primary price information and the secondary price information.

15. The system according to claim 14, characterised in that the computer (12) also calculates the secondary price information from the primary price information using an exchange rate.

16. The system according to claim 15, characterised in that the first portion of the EPL (22) displays total price information and the second portion displays unit price information, and wherein the computer (12) also reads a package size of one for the item, calculates primary unit price information for the item in the primary currency based upon the package size, calculates secondary unit price information for the item using the secondary currency exchange rate information, and sends a message to the EPL (22) to display primary total price information in the first currency in the first portion and the secondary unit price information equal to secondary total price information in the second portion.
